# EUROPÄISCHE PATENTSCHRIFT

(11) **EP 2 978 650 B1**
(45) Veröffentlichungstag und Bekanntmachung des Hinweises auf die Patenterteilung: **30.11.2016**
(21) Anmeldenummer: 14723319.1
(22) Anmeldetag: 11.03.2014
(51) Int. Cl.: B60W 30/18

(54) **VERFAHREN UND VORRICHTUNG FÜR EINEN ÜBERHOLASSISTENTEN**
METHOD AND DEVICE FOR AN OVERTAKING ASSISTANCE SYSTEM
PROCÉDÉ ET DISPOSITIF POUR SYSTÈME D'ASSISTANCE AU DÉPASSEMENT

(30) Priorität: 27.03.2013 DE 102013005248
(43) Veröffentlichungstag der Anmeldung: 03.02.2016
(73) Patentinhaber: Conti Temic microelectronic GmbH, 90411 Nürnberg (DE)
(72) Erfinder: HEINRICH, Stefan, 77855 Achern (DE); HEGEMANN, Stefan, 88239 Wangen (DE); FISCHER, Marc, 88149 Nonnenhorn (DE)
(86) Internationale Anmeldenummer: PCT/DE2014/200120
(87) Internationale Veröffentlichungsnummer: WO 2014/154214

(56) Entgegenhaltungen:
- EP-A2- 1 958 840
- DE-A1-102011 016 770
- DE-A1-102012 001 405
- US-A1- 2012 296 522

## Beschreibung

Die Erfindung betrifft das technische Gebiet der Fahrerassistenzsystem für Kraftfahrzeuge und zumindest teilweise autonom fahrende Fahrzeuge.

Überholassistenten für Fahrzeuge sind Stand der Technik. Dazu wird der seitlich-rückwärtige Raum eines Fahrzeugs mit zumindest einem Sensorsystemen überwacht. Das Sensorsystem ist insbesondere als Kamera-,Radar- oder Lidarsystem bzw. als eine Kombination der genannten Sensoren ausgestaltet. Bei Erkennung einer Überholabsicht des Fahrer z.B. bei Blinkerbetätigung wird eine Warnung an den Fahrer ausgegeben, wenn sich ein anderes Fahrzeug im seitlich-rückwärtige Raum eines Fahrzeugs auf der Überholspur befindet.
Die Schrift DE 10 2011 016 770 A1 offenbart ein Verfahren zur Unterstützung des Fahrers bei einem Fahrspurwechsel. Das Verfahren umfasst eine Erkennung von Objekten auf der eigenen Fahrspur und auf einer Nachbarfahrspur und die Erkennung einer einen Fahrspurwechsel anzeigenden Aktion des Fahrers.

In der Offenlegungsschrift DE 10 2012 001 405 A1 wird ebenfalls ein Verfahren zur Durchführung eines Fahrspurwechsels angegeben. Dazu wird eine Übergangstrajektorie von der Momentanfahrspur in die Zeilfahrspur unter Berücksichtigung von vorgegebenen Grenzwerten für die Fahrdynamikparameter ermittelt.

Die EP 1 958 840 A2 beschreibt einen Lückenmelder für einen Spurwechsel eines Kraftfahrzeugs. Eine Umfeldsensorik erfasst den Verkehr auf zumindest einer Nebenspur und es werden für einen Spurwechsel ausreichende Verkehrslücken bestimmt und an einen Fahrer ausgegeben.

Die US Offenlegungsschrift US 2012/0296522 A1 offenbart eine System zur Fahrunterstützung. Dazu sind zumindest drei Kamerasensoren vorgesehen, die einen Bereich vor einem Fahrzeug und einen Bereich rechts und links seitlich hinter einem Fahrzeug überwachen. Basierend auf diesen Sensordaten ist eine Spurhalte- und eine Spurwechselfunktion zur Unterstützung des Fahrers vorgesehen.

Eine Übertragung des beschriebenen Verfahrens auf Fahrzeuge, die einen Überholvorgang autonom durchführen, hat den Nachteil, dass Fahrzeuge auf der Überholspur die sich mit einer hohen Relativgeschwindigkeit dem Fahrzeug annähern erst sehr spät von den Umfelderfassungssystem mit einer vorgegebenen Reichweite erfasst werden. Eine Kollision ist in diesem Fall wahrscheinlich oder sogar unvermeidlich. Die Problematik soll im Folgenden anhand eines Zahlenbeispiels verdeutlicht werden.
Ein Fahrzeug fährt auf einer Autobahn mit ca. 130 km/h. Hinter einem langsam fahrenden Lkw kann die Fahrzeuggeschwindigkeit z.B. auch nur 80 km/h betragen. In Deutschland zulassungsfähige Fahrzeuge erreichen eine Höchstgeschwindigkeit von bis zu 430km/h. Es kann während eines Überholvorgangs auf der Autobahn also eine Differenzgeschwindigkeit von bis zu 350 km/h (97,7 m/s) auftreten. Heute übliche Sensorreichweiten für die Erfassung eines Bereichs seitlich hinter dem Fahrzeug betragen zwischen 60 und 200 m.
Im Extremfall beträgt die Zeitspanne bis zu einer Kollision weniger als drei Sekunden, wenn ein langsames Fahrzeug auf die Überholspur einschert. Selbst wenn der Fahrer des herannahenden Fahrzeuges schnell reagiert und noch bremsen kann, ist diese Verkehrssituation risikoreich und sollte vermieden werden.

Es ist die Aufgabe der hier vorliegenden Erfindung ein Verfahren und eine Vorrichtung für einen sicheren autonomen Einschervorgang eines Fahrzeugs auf eine Nachbarspur anzugeben.

Die Aufgabe wird durch die Merkmale der unabhängigen Ansprüche gelöst.

Erfindungsgemäß wird ein Verfahren für einen Überholassistenten für ein Fahrzeug angegeben. Das Fahrzeug ist mit Umfelderfasungssensorsystemen zur Erfassung von Objekten auf der eigenen und einer benachbarten Fahrspur seitlich-hinter dem Fahrzeug ausgestattet. Vorzugsweise wird auch der Raum vor dem Fahrzeug durch Umfelderfassungssensoren erfasst. Im Stand der Technik sind Umfelderfassungssensorsysteme für eine adaptive Geschwindigkeitsregelung, Spurverlassenswarnung, Totwinkelüberwachung, Rückraumüberwachung o.ä. Fahrerassistenzsysteme bekannt, die auch für einen Überholassistenten verwendet werden können.
Ein autonomes Einscheren auf eine benachbarte Fahrpur wird nur dann eigeleitet, wenn auf der benachbarten Spur ein erstes Fahrzeug erkannt wird. Das erste Fahrzeug wird als Referenz für eine Geschwindigkeit von Fahrzeugen auf der Überholspur genommen. Zudem wird angenommen, dass ein schnell von hinten an das erste Fahrzeug auf derselben Spur herannahendes zweites Fahrzeug, das erste Fahrzeug wahrgenommen hat und seine Geschwindigkeit an die Geschwindigkeit des ersten Fahrzeug anpassen wird.

In einer positiven Ausgestaltung der Erfindung wird ein autonomer Überholvorgang nur in Abhängigkeit von der Relativgeschwindkeit zwischen dem Fahrzeug und dem erstem Fahrzeug eingeleitet. Der Wert der Relativgeschwindkeit muß in einem vorgebbaren Bereich liegen. Der vorgebbare Bereich für die Relativgeschwindigkeit kann auch von der Fahrzeuggeschwindigkeit von den Straßenverhältnissen und er Witterung abhängig sein.

In einer bevorzugten Ausgestaltung der Erfindung erfolgt das Einscheren des Fahrzeugs auf die Überholspur z.B. vor dem ersten Fahrzeug, wobei das Fahrzeug ggf. die Fahrt beschleunigt, um vor dem ersten Fahrzeug einzuscheren. Dieses Vorgehen ist insbesondere dann zweckmässig, wenn das erste Fahrzeug auf der Überholspur deutlich langsamer als das Fahrzeug fährt oder zumindest nicht schneller als das Fahrzeug fährt.

Weiterhin ist diese Ausgestaltung ist insbesondere vorteilhaft, wenn das erste Fahrzeug mit einer Geschwindigkeit kleiner oder gleich der vorgegebene Sollgeschwindigkeit des Fahrzeugs fährt. Die Sollgeschwindigkeit des Fahrzeugs wird z.B. in Abhängigkeit vom Straßentyp oder von Geschwindigkeitsbegrenzungen bestimmt oder vom Fahrer gesetzt. Eine typische Sollgeschwindigkeit für eine Fahrt auf einer Autobahn ist 130 km/h. Fahren langsamere Fahrzeuge vor dem Fahrzeug wird die tatsächliche Geschindigkeit entsprechend angepasst, um eine Kollision mit dem vorausfahrenden Fahrzeug zu verhindern. Eine solche Geschwindigkeitsregelung wird auch Adaptive Cruise Control genannt.

Alternativ kann ein Einscheren hinter dem ersten Fahrzeug vorgesehen sein, wobei das Fahrzeug ggf. die Fahrt verlangsamt um hinter dem ersten Fahrzeug einzuscheren. Dieses Vorgehen ist insbesondere zweckmäßig, wenn die Geschwindigkeit des Fahrzeugs und des ersten Fahrzeugs ähnlich sind. Als ähnlich werden Geschwindigkeiten angesehen, die sich um nicht mehr als 20km/h oder 15km/h oder 10km/h oder 5 km/h oder 1 km/h unterscheiden.

In einer bevorzugten Ausgestaltung der Erfindung wird ein autonomes Einscheren auf eine andere Spur nur dannausgeführt, wenn zusätzlich zu dem ersten Fahrzeug ein zweites Fahrzeug auf der Überholspur hinter dem ersten Fahrzeug erkannt wird und eine Lücke zwischen dem ersten und dem zweiten Fahrzeug hinreichend groß für einen Einschervorgang des Fahrzeugs ist.

Vorzugsweise wird ein autonomer Überholvorgang nur dann ausgeführt, wenn der Wert einer Relativgeschwindigkeit zwischen dem Fahrzeug und dem zweiten Fahrzeug in einem vorgegebenen Bereich liegt. Insbesondere sollte das Fahrzeug nicht langsamer als das zweite Fahrzeug fahren bzw. sollte die Sollgeschwindigkeit des Fahrzeugs nicht kleiner als die Geschwindigkeit des zweiten Fahrzeugs sein, da das Fahrzeug vor dem zweiten Fahrzeug einscheren wird.

In einer bevorzugten Ausgestaltung der Erfindung ist die Lücke zwischen erstem und zweiten Fahrzeug größer als ein vorgegebener Schwellwert, insbesondere größer als ein Schwellwert von 40, 50, 60, 70 oder 80 m.

In einer weiteren Ausgestaltung der Erfindung ist der Schwellwert für die Lücke zwischen erstem und zweitem Fahrzeug abhängig von der Geschwindigkeit des Fahrzeugs oder von der Relativgeschwindigkeit zum ersten Fahrzeug oder von der Relativgeschwindigkeit zum zweiten Fahrzeug. Bei kleineren Geschwindigkeiten darf in eine kleinere Lücke eingeschert werden, bei großen Geschwindigkeiten nur in größere Lücken.
Die Größe der Lücke wird insbesondere so gewählt, daß ein ausreichender Sicherheitsabstand zum ersten und zweiten Fahrzeug gegeben ist. Der Sicherheitsabstand wiederum kann aus der Geschwindigkeit des Fahrzeugs berechnet werden. Die Berechnung des Sicherheitsabstands ist dem Fachmann geläufig. Eine Faustformel besagt, dass der Abstand gleich dem halben Tacho sein soll. Der Sicherheitsabstand ist stark von den Straßenverhältnissen und er Witterung abhängig. Auch diese können bei der Berechnung berücksichtigt werden. Bei nasser Fahrbahn sollte ein erhöhter Sicherheitsabstand eingehalten werden, da sich der Bremsweg verlängert.

Zudem wird eine Vorrichtung zum Ausführen eines autonomen Überholvorgangs für ein Fahrzeug angegeben. Das Fahrzeug ist mit Umfelderfasungssensorsystemen zur Erfassung von Objekten auf der eigenen und einer benachbarten Fahrspur vor und hinter dem Fahrzeug und mit Mittel zur automatischen Längs- und Querregelung ausgestattet. Die Vorrichtung umfasst eine Steuereinheit mit einem elektronischen Speicher, auf dem ein Verfahren wie zuvor beschrieben hinterlegt ist.

## Patentansprüche

1. Verfahren für einen Überholassistenten für ein Fahrzeug mit Umfelderfasungssensorsystemen zur Erfassung von Objekten auf der eigenen und einer benachbarten Fahrspur hinter und ggf. vor dem Fahrzeug,
**dadurch gekennzeichnet, dass**
ein autonomes Einscheren auf die Überholspur nur dann eigeleitet wird, wenn auf der Überholspur ein erstes Fahrzeug erkannt wird.

2. Verfahren Anspruch 1,
**dadurch gekennzeichnet, dass**
autonomer Überholvorgang nur dann eigeleitet wird, wenn der Wert der Relativgeschwindkeit von dem Fahrzeug und dem ersten Fahrzeug einen Wert in einem vorgebenen Bereich einnimmt.

3. Verfahren nach Anspruch 1 oder 2,
**dadurch gekennzeichnet, dass**
ein Einscheren des Fahrzeugs vor dem ersten Fahrzeug vorgesehen ist, wenn die Geschwindigkeit des Fahrzeugs größer oder gleich der Geschwindigkeit des ersten Fahrzeugs ist.

4. Verfahren nach einem der vorherigen Ansprüche,
**dadurch gekennzeichnet, dass**
ein Einscheren nur dann vorgesehen ist, wenn zusätzlich zu dem ersten Fahrzeug ein zweites Fahrzeug auf der Überholspur hinter dem ersten Fahrzeug erkannt wird und eine Lücke zwischen dem ersten und dem zweiten Fahrzeug hinreichend groß für einen Einschervorgang des Fahrzeugs ist.

5. Verfahren nach Anspruch 4,
**dadurch gekennzeichnet, dass**
autonomer Überholvorgang nur dann eigeleitet wird, wenn der Wert für eine Relativgeschwindigkeit zwischen dem Fahrzeug und dem zweiten Fahrzeug in einem vorgegebenen Bereich liegt, wobei der Schwellwert insbesondere von der Fahrzeuggeschwindigkeit abhängt.

6. Verfahren nach einem der vorherigen Ansprüche 4 oder 5,
daurch gekennzeichnet, dass
die Lücke zwischen dem erstem und dem zweiten Fahrzeug größer als ein vorgegebener Schwellwert ist, insbesondere ist der Schwellwert 40, 50, 60, 70 oder 80 m.

7. Verfahren nach Anspruch 4, 5 oder 6,
**dadurch gekennzeichnet, dass**
die Lücke zwischen dem erstem und dem zweiten Fahrzeug größer als ein vorgegebener Schwellwert ist, wobei der Schwellwert in Abhängigkeit von der Geschwindigkeit des Fahrzeugs oder von der Relativgeschwindigkeit zum ersten Fahrzeug oder in Abhängigkeit von der Relativgeschwindigkeit zum zweiten Fahrzeug gewählt wird.

8. Vorrichtung zum Einleiten eines autonomen Überholvorgangs für ein Fahrzeug mit Umfelderfasungssensorsystemen zur Erfassung von Objekten auf der eigenen und einer benachbarten Fahrspur vor und hinter dem Fahrzeug, die eine Steuereinheit mit einem elektronischen Speicher umfasst, auf der ein Verfahren nach einem der vorherigen Ansprüche hinterlegt ist.

9. Fahrzeug mit Vorrichtung nach Anspruch 8.

## Claims

1. A method for an overtaking assistance system for a vehicle equipped with environment sensing systems for detecting objects in its own lane and an adjacent lane behind, and if necessary in front of, the vehicle,
**characterized in that**
autonomous cutting into the passing lane is only initiated if a first vehicle is detected in the passing lane.

2. The method according to claim 1,
**characterized in that**
an autonomous overtaking manoeuvre is only initiated if the value of the relative speed of the vehicle and the first vehicle is in a predetermined range.

3. The method according to Claim 1 or 2,
**characterized in that**
the vehicle performs the cutting in manoeuvre in front of the first vehicle if the speed of the vehicle is higher than or equal to the speed of the first vehicle.

4. The method according to any one of the preceding claims,
**characterized in that**
cutting in is only performed if a second vehicle is detected in addition to the first vehicle in the passing lane behind the first vehicle, and a gap between the first and the second vehicles is big enough for a cutting in manoeuvre of the vehicle.

5. The method according to claim 4,
**characterized in that**
an autonomous overtaking manoeuvre is only initiated if the value of a relative speed between the vehicle and the second vehicle is in a predetermined range, wherein the threshold value depends in particular on the vehicle speed.

6. The method according to any one of the preceding claims 4 or 5,
**characterized in that**
the gap between the first and the second vehicles is greater than a predetermined threshold value, in particular the threshold value is 40, 50, 60, 70 or 80 m.

7. The method according to claim 4, 5 or 6,
**characterized in that**
the gap between the first and the second vehicles is greater than a predetermined threshold value, wherein the threshold value is selected depending on the speed of the vehicle or the relative speed of the vehicle to the first vehicle or depending on the relative speed of the vehicle to the second vehicle.

8. A device for initiating an autonomous overtaking manoeuvre for a vehicle equipped with environment sensing systems for detecting objects in its own lane and an adjacent lane in front of and behind the vehicle, which includes a control unit with an electronic memory in which is stored a program for executing a method according to any one of the preceding claims.

9. A vehicle having the device according to claim 8.

## Revendications

1. Procédé destiné à un système d'assistance au dépassement pour un véhicule pourvu de systèmes de capteurs d'environnement permettant de détecter des objets à l'arrière du véhicule et le cas échéant devant celui-ci sur la voie de circulation propre et une voie de circulation adjacente,
**caractérisé**
**en ce qu'**un rabattement autonome sur la voie de dépassement n'est engagé que si un premier véhicule est reconnu sur la voie de dépassement.

2. Procédé selon la revendication 1,
**caractérisé**
**en ce qu'**un dépassement autonome n'est engagé que si la valeur de vitesse relative du véhicule et du premier véhicule devient atteint une valeur dans une plage définie.

3. Procédé selon la revendication 1 ou 2,
**caractérisé**
**en ce qu'**un rabattement du véhicule devant le premier véhicule est prévu si la vitesse du véhicule est supérieur ou égale à la vitesse du premier véhicule.

4. Procédé selon l'une des revendications précédentes,
**caractérisé**
**en ce qu'**un rabattement n'est prévu que si en plus du premier véhicule, un deuxième véhicule est reconnu derrière le premier véhicule sur la voie de dépassement et qu'une distance entre le premier et le deuxième véhicule est suffisamment grande pour un rabattement du véhicule.

5. Procédé selon la revendication 4,
**caractérisé**
**en ce qu'**un dépassement autonome n'est engagé que si la valeur pour une vitesse relative entre le véhicule et le deuxième véhicule est comprise dans une plage prescrite, la valeur seuil étant en particulier fonction de la vitesse du véhicule.

6. Procédé selon la revendication 4 ou 5,
**caractérisé**
**en ce que** la distance entre le premier et le deuxième véhicule est supérieure à une valeur seuil prescrite, en particulier en ce que la valeur seuil est de 40, 50, 60, 70 ou 80 m.

7. Procédé selon la revendication 4, 5 ou 6,
**caractérisé**
**en ce que** la distance entre le premier et le deuxième véhicule est supérieure à une valeur seuil prescrite, la valeur seuil étant sélectionnée en fonction de la vitesse du véhicule, ou de la vitesse relative par apport au premier véhicule, ou en fonction de la vitesse relative par rapport au deuxième véhicule.

8. Dispositif pour engager un dépassement autonome pour un véhicule pourvu de systèmes de capteurs d'environnement permettant de détecter des objets à l'arrière du véhicule et le cas échéant devant celui-ci sur la voie de circulation propre et une voie de circulation adjacente, comprenant une unité de commande avec une mémoire électronique où est mémorisé un procédé selon l'une des revendications précédentes.

9. Véhicule, avec un dispositif selon la revendication 8.
